# EUROPEAN PATENT APPLICATION

(11) **EP 1 563 741 A1**
(43) Date of publication of application: **17.08.2005**
(21) Application number: 05075262.5
(22) Date of filing: 02.02.2005
(51) Int. Cl.: A23C 9/15, A23C 9/154

(54) **Skimmed milk product for consumption and method for its preparation**

(30) Priority: 12.02.2004 NL 1025472
(71) Applicant: Campina Nederland Holding B.V., 5301 LB Zaltbommel (NL)
(72) Inventor: van Rossenberg-Broekhuizen, Ingrid, 1187 AV Amstelveen (NL)
(74) Representative: Bot, David Simon Maria

(57) **Abstract**

The invention relates firstly to a skimmed-milk product for consumption, obtainable by mixing skimmed milk containing approximately 0% by weight of fat with desired ingredients, wherein the ingredients improve at least the flavour and the mouthfeel and to this end comprise viscosity-increasing agents and in addition micellar casein. The invention also describes a method for preparing a skimmed-milk product for consumption of this type.

In one attractive embodiment, the skimmed-milk product for consumption has the following composition:
skimmed milk powder in a quantity of 0.1-1.5% by weight;
milk protein concentrate comprising approximately 80% by weight of milk protein in a quantity of 0.05-0.75% by weight, modified tapioca starch in a quantity of 0.05-1.0% by weight and flavouring in a quantity of 0.001-0.02% by weight, while the remainder up to 100% consists of skimmed milk with a fat content of at most 0.05% by weight.

## Description

The invention relates firstly to a skimmed-milk product for consumption, obtainable by mixing skimmed milk containing approximately 0%, by weight of fat with desired ingredients, wherein the ingredients improve at least the flavour and the mouthfeel compared to skimmed milk and to this end comprise viscosity-increasing agents and in addition micellar casein. In the text which follows, the term skimmed-milk product for consumption will be shortened to skimmed-milk product.

Skimmed milk per se is a known liquid in the dairy industry; skimmed milk is milk from which the cream has been removed, with a fat content of virtually 0% and a protein content of approximately 3.5%, of which 2.8% is in the form of micellar casein, and a lactose content of approximately 4.6%. The casein micells in the milk differ in terms of size - 20-300 nm - from the globular proteins, which have a dimension of 3 to 6 nm. The casein/whey protein ratio in milk protein is approximately 80/20 on a weight basis.

Science and technology has also disclosed other milk compositions which have certain similarities to that of the invention. For example, WO 9305661, in the name of Ferraro, is known. This publication describes a composition which is based on 0.1% skimmed milk, milk powder and a thickening agent (carrageen). Furthermore, flavourings can be added. This publication differs from the present invetion by virtue of the fat content of the skimmed milk, which is higher in the above publication than according to the invention. Moreover, the combination of micellar casein and viscosity-increasing agents and the associated synergetic effect of the combination is not described or suggested.

EP 0 345 226 in the name of The Nutrasweet Company is also known. This publication describes the use of casein micells as a fat substitute. The publication describes a composition for use as a frozen milk dessert which contains skimmed milk, UF skimmed milk containing casein micells, and viscosity-increasing agents (specifically modified starch, alginate and carrageen). In addition, flavourings and cream extract type flavourings may be present. The fat content of the skimmed milk used is not specified in the publication, and moreover this composition is lower in micellar casein content than the invention. A yoghurt composition is described in US 4,837,035 in the name of The Pro-mark Companies. This publication describes a low-fat yoghurt of the custard type, and Example II in column 11 describes a composition. This yoghurt composition is based on a skimmed milk with a fat content of 0.1% and also a stabilizer composition which, inter alia, contains modified starch and milk powder. However, yoghurt is an altogether different product having different characteristics from the milk composition according to the invention. A yoghurt based on buffalo milk is also described in a publication from the "Egyptian Journal of Dairy Science", 2002, 30(2) 177-190. The publication describes a yoghurt-like milk product which, in addition to skimmed buffalo milk, contains 1-4% of MPC, (corresponding to 0.64-2.56% of added casein). Buffalo milk generally contains 3.2-3.6% of casein, which is more than conventional cow's milk. The addition of MPC causes the composition from the article to have a higher casein content than is intended for the present invention.

For diet reasons, may people use skimmed milk.

However, skimmed milk has the drawback that the taste is often somewhat watery and that it has little "mouthfeel".

The Applicant has set itself the object of improving the flavour and mouthfeel of skimmed milk, and to this end the Applicant has undertaken extensive research combined with flavour tests carried out by a panel. This research endeavoured to establish a delicate balance of flavour components.

As indicated above, it has been found that the skimmed milk product is considerably improved if the ingredients added to the skimmed milk are aimed at improving the flavour and mouthfeel and to this end comprise the viscosity-increasing agents and in addition micellar casein.

This discovery is fundamentally surprising. As is known, skimmed milk contains approximately 3.5% of milk protein, of which 80% is in the form of micellar casein. The less favourable taste and mouthfeel appear to be linked to the presence of substantially micellar casein and lactose and the absence of fat in the skimmed milk, and it was an unexpected discovery that a considerable improvement in taste and mouthfeel, as well as an improvement in the white/opaque colour, were obtained by the addition of additional micellar casein in combination with a viscosity-increasing agent.

Various types of viscosity-increasing agents can be used, such as starch-type materials, food fibre materials, carrageen, agar-agar, gelatin and cellulose materials.

The viscosity-increasing agents are expediently selected from starch-type materials. The viscosity-increasing agents advantageously comprise modified starch. The term "modified starch" indicates that the starch has been modified, in order, in the present case, to obtain digestion of the starch at temperatures which apply during the preparation of the product discussed in the present application.

The present product is, for example, pasteurized for 20 sec at 76°C; the modified starch must therefore also be digested at a temperature below 76°C, so that its full effect on the flavour and mouthfeel is obtained.

It is advantageous for the modified starch to be modified tapioca starch with a gelling temperature of approximately 60°C and a Brabender viscosity in a 5% strength concentration at 95°C of at most 450BU.

Obviously, other starch materials can also be used, but good results are obtained with modified tapioca starch. One example of a modified tapioca starch of this type that can be used is TEXTRA produced by National Starch and Chemical, Manchester, UK.

The additional micellar casein may originate from various sources selected, for example, from milk protein concentrate (80% protein, 7.5% ash, 5.5% lactose), skimmed milk powder (35% protein, 8% ash, 52% lactose) and mixtures of these materials.

If skimmed milk powder is used, on the one hand the product acquires a salty taste, but on the other hand boosting of the milk flavour is observed. If milk protein concentrate is used, on the one hand there is a slight change in flavour, but on the other hand the white colour increases significantly. On a scale from 1 to 100 (1 = poor and 100 = very good), the white colour improves from 54 to 59 if the micellar casein content changes from 3.1 to 3.4% by weight.

Surprisingly, it has been found that good flavour results are obtained in particular if the additional micellar protein is provided by milk protein concentrate and skimmed milk powder. Although in particular the flavour of skimmed milk is not as good as the flavour of semi-skimmed milk, which is ascribed to the exclusive presence of micellar casein and lactose and the absence of fat, it was surprising to note that the addition of additional micellar milk protein from the two sources mentioned above gave a considerable improvement. The combination of a better mouthfeel and a better flavour was achieved by the combination of the viscosity-increasing agents, such as modified tapioca starch and micellar casein from milk protein concentrate, on the one hand, and skimmed milk powder, with its typical milk flavour, on the other hand.

Without wishing to be tied to any particularly theory, the Applicant notes that a synergism appears to occur between the viscosity-increasing agent, on the one hand, and the addition of additional micellar milk protein, on the other hand, resulting in an improvement of the flavour and the mouthfeel of the skimmed milk product. It has been found that neither the viscosity-increasing agent on its own nor the micellar casein, from one or two sources, on its own is able to create the abovementioned improvement. Only when the viscosity-increasing agent and additional micellar casein are combined is a significant improvement to the flavour and mouthfeel perceived.

In particular, in the skimmed milk product according to the invention, the total quantity of micellar casein is between 2.8 and 3.9% by weight, based on the total.

It is preferably for the total quantity of micellar casein' in the skimmed milk product to be between 3.1 and 3.4% by weight, based on the total composition of the skimmed milk product.

Depending on the source of the micellar casein, the quantity of lactose in the skimmed milk product will also be increased compared to the quantity of lactose which is normally present in skimmed milk.

A suitable representative of a product comprising micellar casein is milk protein concentrate, for example MPC 80 produced by MIZO (Hungary), which contains approximately 80% by weight of milk protein, of which at least 80% is micellar casein. The product is obtained by ultra filtration and then pasteurized at a low temperature.

Skimmed milk powder is available from a range of manufacturers, among which mention may be made, for example, of Humana Milchunion (Germany). A skimmed milk powder of this type comprises, for example, 35% of milk protein, of which approximately 28% by weight is micellar casein.

It is advantageous for one or more flavourings, such as for example a cream extract type flavouring, to be added to the skimmed milk product according to the invention. An example of a suitable representative of a material of this type is Dried Cream Extract produced by Butterbuds (USA).

The skimmed milk product as described above expediently has the following composition:
skimmed milk powder is present in a quantity (based on the total) of 0.1-1.5% by weight; milk protein concentrate is present in a quantity of 0.05-0.75% by weight, modified tapioca starch is present in a quantity of 0.05-1.0% by weight, and flavouring is present in a quantity of 0.001-0.02% by weight, while the remainder up to 100% consists of skimmed milk with a fat content of at most 0.05% by weight.

In the composition described above, the quantity of lactose is from 4.7 to 5.4% by weight, based on the total.

It is preferable for the skimmed milk product to have the following composition:
1.0% by weight of skimmed milk powder, 0.20% by weight of milk protein concentrate, 0.55% by weight of modified tapioca starch and 0.01% by weight of cream extract are added, and the remainder up to 100% consists of skimmed milk with a fat content of at most 0.05% by weight.

In the composition described above, the quantity of lactose is approximately 5.1% by weight, based on the total.

The quantities given above are based on the total composition; with regard to the preferred composition, it should be realised that the deviations of plus or minus 10% from the indicated values will lead to the same optimum result.

The fact that skimmed milk with a fat content of at most 0.05% by weight is stipulated is to do with the cream removal process. According to Dutch Food Legislation, milk with a fat percentage of up to 0.5% by weight may be described as skimmed milk. However, when communicating with consumers, a milk with a fat content of 0.0-0.07% by weight can still be described as a milk containing 0% fat. The present application is directed in particular at skimmed milk containing 0% fat.

The invention also relates to a method for preparing a skimmed milk product as described above, and to this end is characterized in that:
- the milk is standardized to a fat content of at most 0.05% by weight,
- the ingredients to be added are dissolved in up to 25% of the skimmed milk formed using a mixing device with a high shearing speed,
- the solution and the quantity of skimmed milk required are combined to form a mixture,
- the mixture is homogenized,
- the mixture is pasteurized,
- the mixture is cooled.

After cooling, the skimmed milk product is introduced into conventional packaging, such as a carton, PET bottle or the like.
In particular, in the method given above the homogenization takes place at 55-60°C and 150 bar, while pasteurization is carried out at 76°C for 20 sec.

As an alternative to the pasteurization treatment described above, it is also possible to carry out a UHT treatment, for example a treatment at approximately 142°C for 3 sec. The person skilled in the art will be able to determine other suitable temperature/time combinations without particular difficulty.
The invention will now be explained on the basis of a number of non-limiting examples.

### Example 1

Milk was standardized to 0.05% by weight of fat. 2.5 1 were taken from 35 kg of milk, and 356.3g of skimmed milk powder (1.0% strength metering), 71.3 g of MPC 80 produced by MIZO (Hungary), 195.9 g of TEXTRA (0.55% modified tapioca starch; National Starch & Chemical; UK) and 3.7 g of Dried Cream Extract (Butterbuds; USA) were dissolved or distributed therein using an Ultraturrax®. The mixture obtained in this way was added to the remainder of the milk, after which the entire mixture, containing 3.2% of micellar casein, was homogenized at 50-55°C and 150 bar.

The homogenized mixture was then pasteurized for 20 sec at 76°C. After cooling to 7°C it was introduced into cartons and the product was stored.

The skimmed milk product formed in this way was tested by various panels, giving the following results:

| **Mean assessment opinions by consumers who generally use skimmed milk (n=104)** | | | |
|---|---|---|---|
| Property Scale 1-100 (1 very poor, 100 very good) | Reference (Skimmed milk containing 1.2% of skimmed milk powder) | Product example 1 | Product example 2 |
| Smell | 50 | 49 | 49 |
| Taste | 42 | 61 | 56 |
| Mouthfeel | 55 | 66 | 62 |
| Aftertaste | 42 | 57 | 56 |
| Overall assessment scale 1-9 (1 very poor, 9 very good) | 5.1 | 6.4 | 6.1 |

### Example 2

355.7 g of skimmed milk powder, 35.6 g of MPC 80, 177.7 g of TEXTRA (0.50%) and 3.2 g of Dried Cream Extract were dissolved or distributed in milk from Example 1. The procedure was the same as that used in Example 1. The test results for this milk containing 3.1% of casein micells are considerably better than those of the reference. The product has a good mouthfeel and body, drinks well and has a good flavour.

### Example 3

Example 1 was repeated, but without skimmed milk powder, MPC 80 and flavouring, and furthermore 122.5 g (0.35%) of Avicel CM2159 produced by FMC (USA) were added instead of the TEXTRA. The said product is composed of a carrageen, carboxymethylcellulose and MCC (microcrystalline cellulose).

After testing, this product was also considered better than the reference. The mouthfeel was similar to that of Example 1; the flavour was slightly worse in terms of creamy character and specific milk flavour, and so was the colour.

## Claims

1. Skimmed-milk product for consumption, obtainable by mixing skimmed milk containing approximately 0% by weight of fat with desired ingredients, wherein the ingredients improve at least the flavour and the mouthfeel compared to skimmed milk and to this end comprise viscosity-increasing agents and in addition micellar casein.

2. Skimmed-milk product for consumption according to claim 1, **characterized in that** the viscosity-increasing agents are selected from starch-type materials, food fibre materials, carrageen, agar-agar, gelatin and cellulose materials.

3. Skimmed-milk product for consumption according to claim 2, **characterized in that** the viscosity-increasing agents are selected from starch-type materials.

4. Skimmed-milk product for consumption according to claims 2-3, **characterized in that** the starch-type material comprises modified starch.

5. Skimmed-milk product for consumption according to claim 4, **characterized in that** the modified starch is modified tapioca starch with a gelling temperature of approximately 60°C and a Brabender viscosity in 5% strength concentration in water at 95°C of at most 450BU.

6. Skimmed-milk product for consumption according to one or more of claims 1-5, **characterized in that** the total quantity of micellar casein amounts to between 2.8 and 3.9% by weight, based on the total.

7. Skimmed-milk product for consumption according to claim 6, **characterized in that** the total quantity of micellar casein amounts to between 3.1 and 3.4% by weight, based on the total.

8. Skimmed-milk product for consumption according to one or more of claims 1-7, **characterized in that** the micellar casein provided is selected from milk protein concentrate and skimmed milk powder or mixtures thereof.

9. Skimmed-milk product for consumption according to claim 8, **characterized in that** the micellar casein is provided by milk protein concentrate and skimmed milk powder.

10. Skimmed-milk product for consumption according to claims 8-9, **characterized in that** the milk protein concentrate comprises approximately 80% by weight of milk protein, of which at least 80% by weight is micellar casein, and the skimmed milk powder comprises approximately 35% by weight of milk protein, of which approx. 80% by weight is micellar casein, and approximately 52% by weight of lactose.

11. Skimmed-milk product for consumption according to one or more of claims 1-10, **characterized in that** one or more flavourings are added.

12. Skimmed-milk product for consumption according to claim 11, **characterized in that** at least one flavouring of the cream extract type is added.

13. Skimmed-milk product for consumption according to one or more of the preceding claims, **characterized in that** skimmed milk powder is present in a quantity of 0.1-1.5% by weight; milk protein concentrate comprising approximately 80% by weight of milk protein is present in a quantity of from 0.05-0.75% by weight, modified tapioca starch is present in a quantity of 0.05-1.0% by weight, and flavouring is present in a quantity of from 0.001-0.02% by weight, with the remainder up to 100% consisting of skimmed milk with a fat content of at most 0.05% by weight.

14. Skimmed-milk product for consumption according to claim 13, **characterized in that** 1.0% by weight of skimmed milk powder, 0.20% by weight of milk protein concentrate, 0.55% by weight of modified tapioca starch and 0.01% by weight of cream extract are added, and the remainder up to 100% consists of skimmed milk with a fat content of up to 0.05% by weight.

15. Method for preparing a skimmed-milk product for consumption according to one or more of claims 1-14, **characterized**
- **in that** milk is standardized to a fat content of at most 0.05% by weight,
- **in that** the ingredients to be added are dissolved in up to 25% of the standardised skimmed milk using a mixing device with a high shearing speed,
- **in that** the solution and the quantity of skimmed milk required are combined to form a mixture,
- **in that** the mixture is homogenized,
- **in that** the mixture is pasteurized,
- **in that** the mixture is cooled.

16. Method according to claim 15, **characterized in that** homogenization takes place at 55-60°C and 150 bar, and **in that** pasteurization is carried out at 76°C for 20 sec.
